# FASCICULE DE BREVET EUROPEEN

(11) **EP 4 376 615 B1**
(45) Date de publication et mention de la délivrance du brevet: **25.11.2026**
(21) Numéro de dépôt: 22764828.4
(22) Date de dépôt: 27.07.2022
(51) Int. Cl.: A01N 43/16, A01N 65/20, A01P 21/00

(54) **STIMULATION DE LA LEVEE DE DORMANCE CHEZ UNE PLANTE**
FÖRDERUNG DES KNOSPENRUHEBRUCH IN EINER PFLANZE
STIMULATION OF REST BREAK IN A PLANT

(30) Priorité: 27.07.2021 FR 2108131
(43) Date de publication de la demande: 05.06.2024
(73) Titulaire: Agro Innovation International, 35400 Saint-Malo (FR); Institut National de Recherche pour l'Agriculture, l'Alimentation et l'Environnement (INRAE), 75007 Paris (FR); UNIVERSITE DE BORDEAUX, 33000 Bordeaux (FR)
(72) Inventeur: VIMONT, Noémie, NORWICH NORFOLK NR14HP (GB); WENDEN, Bénédicte, 33300 BORDEAUX (FR); JAMOIS, Frank A, 35520 LA CHAPELLE-DES-FOUGERETZ (FR); ARKOUN, Mustapha Y, 35430 SAINT-JOUAN DES GUERETS (FR); YVIN, Jean-Claude, 35400 SAINT-MALO (FR); CRUZ, Florence T, 35400 SAINT-MALO (FR)
(74) Mandataire: Cabinet Beau de Loménie
(86) Numéro de dépôt international: PCT/FR2022/051517
(87) Numéro de publication internationale: WO 2023/007095

(56) Documents cités:
- ALBURQUERQUE N ET AL: "Chilling and heat requirements of sweet cherry cultivars and the relationship between altitude and the probability of satisfying the chill requirements", ENVIRONMENTAL AND EXPERIMENTAL BOTANY, ELSEVIER, AMSTERDAM, NL, vol. 64, no. 2, 1 November 2008 (2008-11-01), pages 162 - 170, XP024527539, ISSN: 0098-8472, [retrieved on 20080131], DOI: 10.1016/J.ENVEXPBOT.2008.01.003
- KUDEN AYZIN BAYKAM ET AL: "Chilling requirements of cherries grown under subtropical conditions of Adana", January 2012 (2012-01-01), XP093282436, Retrieved from the Internet <URL:https://www.researchgate.net/profile/Songul-Comlekcioglu/publication/289900272_Chilling_requirements_of_cherries_grown_under_subtropical_conditions_of_Adana/links/636cf86854eb5f547cbea1a8/Chilling-requirements-of-cherries-grown-under-subtropical-conditions-of-Adana.pdf> [retrieved on 20221110], DOI: 10.5829/idosi.mejsr.2012.12.11.1623
- ALOIS BILAVCÍK ET AL: "Dormancy development during cold hardening of in vitro culturedBorkh. plants in relation to their frost resistance and cryotolerance", TREES ; STRUCTURE AND FUNCTION, SPRINGER, BERLIN, DE, vol. 26, no. 4, 14 February 2012 (2012-02-14), pages 1181 - 1192, XP035086829, ISSN: 1432-2285, DOI: 10.1007/S00468-012-0694-7
- IBÁÑEZ CRISTIAN ET AL: "Winter induction of the galactinol synthase gene is associated with endodormancy in chestnut trees", TREES, BERLIN, DE, vol. 27, no. 5, 19 April 2013 (2013-04-19), pages 1309 - 1316, XP035363741, ISSN: 0931-1890, [retrieved on 20130419], DOI: 10.1007/S00468-013-0879-8
- YU X-Z ED - YASSIN MOHAMED MOHAMED_F_YASSIN@HOTMAIL COM F: "Uptake, assimilation and toxicity of cyanogenic compounds in plants: facts and fiction", INTERNATIONAL JOURNAL OF ENVIRONMENTAL SCIENCE AND TECHNOLOGY, CENTER FOR ENVIRONMENT AND ENERGY RESEARCH AND STUDIES (C E E R S), IR, vol. 12, no. 2, 10 April 2014 (2014-04-10), pages 763 - 774, XP035423136, ISSN: 1735-1472, [retrieved on 20140410], DOI: 10.1007/S13762-014-0571-6
- AGNIESZKA GNIAZDOWSKA ET AL: "Nitric oxide, hydrogen cyanide and ethylene are required in the control of germination and undisturbed development of young apple seedlings", PLANT GROWTH REGULATION, KLUWER ACADEMIC PUBLISHERS, DO, vol. 61, no. 1, 29 January 2010 (2010-01-29), pages 75 - 84, XP019789488, ISSN: 1573-5087

## Description

### Domaine technique

L'invention trouve son application dans le domaine agroécologique et agricole et concerne en particulier la stimulation de la levée de dormance chez une plante.

### Arrière-plan technologique

La différenciation entre les saisons représente un facteur d'importance pour la vie des plantes et la production végétale, en particulier chez les cultures pérennes.

Pendant les périodes de froid, les plantes entrent dans une période appelée « dormance ». La dormance est communément appelée la « pause hivernale » de la plante. Cette période prépare le développement des bourgeons latents au printemps pour permettre le débourrement. La dormance peut être divisée en deux périodes : l'endodormance et l'écodormance.

L'endodormance correspond à l'inhibition du développement provenant du méristème du bourgeon latent. Elle est induite par des facteurs internes à la plante qui empêchent la levée de la dormance, même si les facteurs externes sont optimaux pour le développement. Outre la régulation hormonale, l'endodormance est déclenchée par le raccourcissement de la durée du jour et la diminution de la température de l'air. Un refroidissement hivernal est nécessaire pour lever l'endodormance. Les besoins en froid pour lever l'endodormance varient entre les espèces de plantes et les variétés.

Lorsque l'endodormance est levée, les bourgeons sont physiologiquement prêts pour débourrer, mais les conditions environnementales doivent être favorables à ce stade pour la levée de l'écodormance. Les plantes peuvent subsister dans un état d'écodormance si les facteurs environnementaux permettant la reprise de l'activité des racines et le développement des bourgeons ne sont pas optimaux. Les principaux facteurs environnementaux responsables de la levée de l'écodormance sont la température (air et sol) et l'eau (teneur en eau du sol).

Cependant, en raison du changement climatique, comme par exemple des hivers plus doux, les besoins en froid associés à cette période de dormance ne sont plus satisfaits, ce qui se traduit par des problèmes de levée de dormance (retard, levée incomplète et non homogène des bourgeons, débourrement hétérogène, avortement...) engendrant une moins bonne floraison et au final de moins bons rendements.

Ainsi, dans le contexte actuel de réchauffement climatique, la production des arbres fruitiers est menacée et ceci s'avère vrai pour la plupart des espèces fruitières d'intérêt économique.

Le calendrier saisonnier des événements phrénologiques est crucial non seulement pour la survie des plantes, mais aussi pour maintenir une production élevée d'arbres fruitiers. Selon certains modèles, à mesure que les températures mondiales augmentent, les récoltes dans certaines régions devraient chuter de 6 à 10% pour chaque augmentation de 1°C de la température. Dans certaines régions où les températures de refroidissement sont insuffisantes, une levée de dormance incomplète a été observée, entraînant un retard de débourrement, un faible taux de débourrement et donc de plus faibles rendements et des fruits de moins bonne qualité.

Les solutions envisageables sont de deux types essentiellement.

Tout d'abord génétique avec la création ou la sélection de nouvelles variétés. Cependant, la mise au point de nouvelles variétés est un processus très long qui peut durer jusqu'à trente ans et l'effet du changement climatique est d'ores et déjà perçu et a considérablement affecté certaines productions, comme la production de cerises dans le sud-est de la France.

Une deuxième solution consiste à appliquer sur la plante des produits stimulant la levée de dormance. Le produit de référence a longtemps été le cyanamide hydrogène (produit DORMEX^{®}). Cependant, ce produit est aujourd'hui interdit par la réglementation Européenne en raison de sa toxicité. De plus, l'application du produit DORMEX^{®} est contraignante en raison de sa toxicité pour les bourgeons débourrés, ce qui nécessite une application à une date très précise avant le débourrement.

Il est donc important de trouver des solutions à court et moyen termes pour maintenir la productivité des espèces de plantes pérennes fruitières. C'est dans ce contexte que se situe l'invention qui répond à un besoin de nouvelles solutions techniques pour stimuler la levée de dormance chez les plantes pérennes fruitières.

### Résumé de l'invention

C'est dans ce contexte que le demandeur a mis en évidence, et ceci constitue le fondement de la présente invention, que les extraits de légumineuse de la famille des fabacées permettaient de stimuler la levée de dormance d'une plante pérenne fruitière.

Selon un premier aspect, l'invention concerne l'utilisation d'un extrait de légumineuse de la famille des fabacées pour stimuler la levée de dormance d'une plante pérenne fruitière, caractérisé en ce que ledit extrait de légumineuse de la famille des fabacées est un extrait aqueux de soja.

Selon un deuxième aspect, l'invention concerne un procédé pour stimuler la levée de dormance d'une plante pérenne fruitière, dans lequel un extrait de légumineuse de la famille des fabacées est apporté à ladite plante pérenne fruitière dans une quantité suffisante pour stimuler la levée de dormance de ladite plante pérenne fruitière, caractérisé en ce que ledit extrait de légumineuse de la famille des fabacées est un extrait aqueux de soja.

### Description détaillée de l'invention

### Définitions

Dans le cadre de la présente invention, le terme « extrait » désigne le produit résultant de l'extraction de composés contenus dans une plante. Les méthodes d'extraction sont largement décrites dans la littérature et faciles à mettre en œuvre par la personne de l'art. Par exemple, un extrait peut être obtenu par extraction aqueuse en milieu acide, neutre ou alcalin à différentes températures ou encore *via* l'utilisation d'un solvant. Dans tous les cas, les conditions d'extraction seront déterminées en fonction des caractéristiques des composés que l'on veut extraire et leur localisation dans les différents organes de la plante.

Le terme « légumineuse » ou « fabacée » désigne une famille de plantes dicotylédones de l'ordre des Fabales. Elle compte environ 765 genres regroupant plus de 19 500 espèces. Les Fabacées, au sens large, sont des plantes herbacées, des arbustes, des arbres ou des lianes. Dans le cadre de l'invention, la légumineuse de la famille des fabacées peut être de la sous-famille des *Faboideae.* De préférence, il s'agit d'une légumineuse à graines de la famille des fabacées, telle que le soja, le haricot, le pois, le pois chiche, la lentille ou la fève.

Dans la présente description, les termes « extrait de légumineuse » et « extrait de légumineuse de la famille des fabacées » sont interchangeables.

Le terme « perméat » désigne le liquide qui a traversé la membrane d'un processus de séparation chimique (osmose inverse, ultrafiltration). Par exemple, un perméat de soja désigne le liquide qui a traversé la membrane d'un processus de séparation chimique à partir d'un extrait de soja (ex. un extrait de fibre de soja ou un extrait de pulpe de soja). Un perméat de soja peut être obtenu par ultrafiltration d'eau de lavage de graines de soja comme décrit dans l'ouvrage Plant Science Review 2011 publié par David Henning.

### Utilisation et procédé selon l'invention

La présente invention découle des avantages surprenants mis en évidence par les inventeurs de l'effet d'un extrait de soja sur la levée de dormance d'une plante pérenne fruitière.

L'invention concerne en effet l'utilisation d'un extrait de légumineuse de la famille des fabacées pour stimuler la levée de dormance d'une plante pérenne fruitière, caractérisé en ce que ledit extrait de légumineuse de la famille des fabacées est un extrait aqueux de soja.

L'invention concerne également un procédé pour stimuler la levée de dormance d'une plante pérenne fruitière, dans lequel un extrait de légumineuse de la famille des fabacées est apporté à ladite plante pérenne fruitière dans une quantité suffisante pour stimuler la levée de dormance de ladite plante pérenne fruitière, caractérisé en ce que ledit extrait de légumineuse de la famille des fabacées est un extrait aqueux de soja.

Des procédés de préparation d'extraits de légumineuses sont largement décrits dans la littérature. Le procédé d'extraction n'est pas limité à un procédé particulier, et les procédés classiquement utilisés sont applicables pour la préparation de l'extrait de légumineuse, par exemple l'extraction aqueuse en milieu acide, neutre ou alcalin.

L'extrait de soja selon la présente invention comprend du raffinose, du stachyose et du verbascose. L'extrait de légumineuse peut ainsi comprendre, en poids dans un extrait sec, de 0,5% à 10% w/w de raffinose, de 1% à 20% w/w de stachyose, de 0,05% à 5% w/w de verbascose. Par exemple, l'extrait de légumineuse comprend de 1% à 3% w/w de raffinose, de 3% à 11% w/w de stachyose et de 0,05% à 0,3% w/w de verbascose. Par exemple, l'extrait de légumineuse comprend environ 3% w/w de raffinose, environ 11% w/w de stachyose et environ 0,1% w/w de verbascose.

Par exemple, un extrait de soja peut être un extrait de fibres de soja, un extrait de pulpe de soja (la pulpe de soja est aussi appelée « okara ») ou un perméat de soja. L'extrait de légumineuse de la famille des fabacées selon l'invention est un extrait aqueux de soja, tel qu'un extrait aqueux de pulpe de soja. L'extrait aqueux de pulpe de soja peut, par exemple, être obtenu en mélangeant de la pulpe de soja avec de l'eau sous agitation à une température comprise entre 20°C et 25°C puis en éliminant les résidus solides, par exemple par filtration. L'Exemple 1 décrit un procédé de préparation d'un extrait aqueux de pulpe de soja.

L'extrait de légumineuse peut être plus ou moins concentré, par ajout d'un solvant (ex. de l'eau) ou par déshydratation. Une déshydratation totale de cet extrait, pour obtenir un extrait sec, permettant une présentation sous forme pulvérulente hydrosoluble peut être réalisée, par exemple, au moyen d'un sécheur à tambour ou par atomisation. L'extrait déshydraté peut être réhydraté pour obtenir un extrait sous forme liquide qui peut être appliqué à la plante.

Dans un mode de réalisation, l'extrait de légumineuse utilisé dans le cadre de la présente invention comprend de 0,001% à 15% d'extrait sec. Généralement, l'extrait de légumineuse comprend de 0,1% à 15% d'extrait sec et peut être dilué avant son utilisation dans un solvant, tel que de l'eau, à un taux de dilution allant de 10 fois à 10000 fois. Par exemple, un extrait de légumineuse comprenant de 0,5% à 10% d'extrait sec peut être dilué dans un solvant dans une proportion allant de 0,01% à 20% v/v.

La composition comprenant un extrait de légumineuse peut être préparée en diluant un extrait de légumineuse dans de l'eau, et éventuellement en ajoutant un tensioactif. Les tensioactifs sont largement utilisés en agriculture. Les tensioactifs permettent de favoriser la rétention sur la plante, d'améliorer la résistance au lessivage, d'optimiser l'étalement, de diminuer la mousse efficacement, de renforcer la pénétration dans la plante, de réduire la dérive et/ou d'améliorer la compatibilité des mélanges. Il peut s'agir d'alcools terpéniques, par exemple d'alcools terpéniques d'origine végétale, comme pour le tensioactif Calanque^{®} commercialisé par Action Pin. Le tensioactif peut également comprendre de l'éthoxylate d'alcool polyéther d'alkyle, de l'alkyl polyglycol et/ou de l'aryl polyéthoxyéthanol, comme pour le tensioactif INEX-A^{®} commercialisé par Cosmocel et Cosmoagro. La personne du métier n'aura aucune difficulté à choisir un tensioactif adapté à l'usage envisagé.

Avantageusement, l'extrait de légumineuse est apporté à la plante sous forme liquide. De préférence, l'application de l'extrait aux plantes est réalisée par voie aérienne. Dans un mode de réalisation particulièrement préféré, l'extrait de légumineuse est apporté à la plante par voie aérienne sous forme liquide. L'application de l'extrait par voie aérienne permet d'appliquer l'extrait directement sur les bourgeons de la plante.

L'extrait peut être apporté à la plante lorsque l'on souhaite stimuler la levée de dormance de ladite plante. En particulier, l'extrait est avantageusement apporté à la plante lorsque cette dernière a reçu environ les ¾ de ses besoins en froid. En général, une plante a reçu les ¾ de ses besoins en froid à la sortie de l'hiver (décembre/janvier dans l'hémisphère nord). Alternativement, l'extrait peut être apporté à la plante de 45 à 55 jours avant la date prévue de débourrement des bourgeons.

La personne du métier n'aura aucune difficulté à déterminer le moment où la plante a reçu ¾ de ses besoins en froid. Il existe différentes méthodes pour calculer l'accumulation de froid de la plante afin de déterminer le moment où cette dernière a reçu ¾ de ses besoins en froid.

La méthode la plus simple qui est couramment utilisée par les producteurs pour savoir si une plante a reçu les ¾ de ses besoins en froid consiste à comptabiliser les heures de froid comprises entre 0°C et 7,2°C, sachant que les températures négatives ne sont pas comptabilisées car elles inhibent tout développement. Les besoins en froid restent spécifiques de chaque variété et sont en général donnés à titre indicatif dans les descriptions des variétés. Afin de déterminer les ¾ des besoins en froid d'une plante, la personne du métier pourra donc s'appuyer sur les données d'une station météo proche et sur les besoins en froid propres à chaque variété.

D'autres méthodes pour savoir si une plante a reçu les ¾ de ses besoins en froid consistent à appliquer des modèles plus ou moins perfectionnés, tel que le « Utah chill model » qui associe les températures à des « chill units ». Ces modèles sont largement décrits dans la littérature.

Dans un mode de réalisation particulier, l'extrait de légumineuse de la famille des fabacées, de préférence sous forme de composition telle que définie ci-dessus, est apporté à la plante en une quantité allant de 1 L/ha à 1000 L/ha (litre/hectare), par exemple de 5L/ha à 500L/ha.

L'extrait de légumineuse peut être apporté à la plante en une seule application ou en plusieurs applications, par exemple en deux, trois, quatre ou cinq applications. Chaque application peut être plus ou moins espacée dans le temps. Par exemple, lorsque l'extrait de légumineuse est apporté à la plante en deux applications, il est préférable d'espacer les deux applications de 7 à 15 jours.

La présente invention trouve application dans le traitement d'une très grande variété de plantes. Parmi celles-ci, on citera en particulier les plantes pérennes, par exemple les plantes pérennes fruitières. En particulier, la plante traitée est un arbre fruitier, par exemple un arbre fruitier à feuilles caduques, tel que le cerisier, le prunier, le pêcher, l'abricotier, l'actinidier, la vigne, le pommier, le poirier, le citronnier, l'oranger.

Dans un mode de réalisation, l'extrait stimule l'expression du gène *FLOWERING LOCUS T(FT)* et/ou réprime l'expression du gène *DORMANCY ASSOCIATED MADS-box 4 (DAM4).* En particulier, l'extrait stimule l'expression du gène *FT* au niveau des bourgeons et/ou réprime l'expression du gène DAM4 au niveau des bourgeons. La demanderesse a en effet mis en évidence que l'extrait de légumineuse de la famille des fabacées active l'expression du gène *FLOWERING LOCUS T (FT)* au niveau des bourgeons et/ou réprime l'expression du gène *DORMANCY ASSOCIATED MADS-box 4 (DAM4)* au niveau des bourgeons.

Les gènes *FLOWERING LOCUS T (FT)* et *DORMANCY ASSOCIATED MADS-box 4 (DAM4)* sont des gènes de régulation décrits comme étant impliqués dans la levée de dormance [1] [2]. Le gène *FT* est un florigène très conservé entre espèces végétales, et son expression est souvent associée avec le démarrage de la floraison. Chez les espèces pérennes qui traversent une période de dormance, le gène *FT* est activé au moment de la levée de dormance, conduisant ensuite au débourrement et à la floraison [3]. Le gène *DAM4* fait partie d'une famille de facteurs de transcription de type MADS-box, qui sont fortement exprimés pendant la dormance et réprimés au moment de la levée de dormance [4].

La dormance et la levée de dormance sont également contrôlées par le statut réduit-oxydé des cellules du bourgeon [5]. Le statut réduit-oxydé peut notamment être évalué par le ratio entre glutathion réduit (GSH) et glutathion oxydé (GSSG). La demanderesse a également montré que l'extrait de légumineuse augmente le ratio GSH (forme réduite du Glutathion) / GSSG (Forme oxydée du Glutathion) au niveau des bourgeons par rapport à une plante n'ayant pas reçu ledit extrait. Ainsi, dans un mode de réalisation, l'extrait augmente le ratio GSH (forme réduite du Glutathion) / GSSG (Forme oxydée du Glutathion) au niveau des bourgeons de la plante ayant reçu l'extrait par rapport à une plante n'ayant pas reçu l'extrait.

Dans un mode de réalisation préféré, la plante n'est pas en outre traitée au cyanamide hydrogène. Ce produit est aujourd'hui interdit par la réglementation Européenne en raison de sa toxicité.

La stimulation de la levée de dormance a pour effet d'améliorer le développement des bourgeons, d'homogénéiser la maturité des bourgeons, d'homogénéiser le débourrement, d'améliorer la floraison et/ou d'homogénéiser les fruits. Ces améliorations s'expriment notamment en termes d'amélioration de rendement et/ou de la qualité de la récolte.

La présente invention est illustrée par les exemples suivants.

### Brève description des figures

[Fig. 1] : Rameaux de cerisier, variété 'Fertard', prélevés au verger sur des arbres traités ou non avec l'extrait de soja, et ensuite placés en chambre de forçage (25°C, 16h de lumière) dans de l'eau pour évaluer le stade de dormance.
[Fig. 2] : Observations du débourrement de bourgeons de cerisiers, variété 'Fertard', traités ou non avec l'extrait de soja, 45 et 56 jours après traitement.
[Fig. 3] : Pourcentage de débourrement après transfert en chambre de forçage pour des rameaux de cerisier, variété 'Earlise, traités à deux dates différentes.
[Fig. 4] : Pourcentage de débourrement pour des rameaux de cerisier, variété 'Fertard, coupés et traités ou non en laboratoire avec l'extrait de soja, observés après 10 (1 application) et 22 jours (2 applications) en conditions de croissance (25°C, 16h de lumière).
[Fig. 5] : Pourcentage de débourrement de rameaux prélevés sur des cerisiers, variété 'Ferrovia', traités avec l'extrait de soja à une concentration de 3%, et comparés à des rameaux traités avec le produit DORMEX^{®} (AzD) et à l'eau, après trois jours en conditions de croissance (25°C, 16h de lumière).
[Fig. 6] : Pourcentage de débourrement de branches prélevées sur des actinidiers traités avec deux concentrations de l'extrait de soja, et comparés à des rameaux traités avec le produit DORMEX^{®} (AzD) et à l'eau, après trois jours en conditions de croissance (25°C, 16h de lumière).
[Fig. 7] : Ratio calculé entre le glutathion réduit (GSH) et le glutathion oxydé (GSSG) dans des bourgeons de cerisier, variété 'Fertard', traités comparé à des bourgeons non traités, prélevés à différentes dates après traitement.
[Fig. 8] : Expression relative des gènes *PavDAM4* et *PavFT* dans des bourgeons de cerisier, variété 'Fertard', traités avec l'extrait de soja comparé à des bourgeons non traités, prélevés à différentes dates après traitement.
[Fig. 9] : Chromatogramme issu d'une chromatographie HPAE-PAD de l'extrait « OKEN ». Les pics correspondent à : 1 - Galactose, 2 - Glucose, 3 - Fructose, 4 - Saccharose, 6 - Raffinose, 7 - Stachyose, 9 - Verbascose. Le chromatogramme montre que l'extrait comprend 1,6% de raffinose, 5,3% de stachyose et 0,25% de verbascose.

### EXEMPLES

### Exemple 1 : Matériel et méthode

### a. Préparation de l'extrait de pulpe de soja « OKEN »

Dans une cuve de 100 L équipée d'un système d'agitation et d'un système de chauffe, 95 kg d'eau ont été introduits et portés à une température de 22°C +/- 2°C. Puis, sous agitation, 5 kg de poudre d'okara (Produit SOGYFIB) ont été introduits dans la cuve. Le milieu a été maintenu à 22°C +/- 2°C sous agitation pendant 24 h. Le mélange a ensuite été filtré sur filtre poche 200 µm. Le pH du filtrat ainsi obtenu a ensuite été ajusté à 5,5 par l'ajout d'acide sulfurique dilué puis additionné de conservateurs alimentaires (0,1% à 0,3% p/p) pour éviter la prolifération bactérienne. L'extrait ainsi obtenu a été appelé ci-après « Extrait OKEN ».

Avant son utilisation, l'extrait « OKEN » a été dilué dans de l'eau à différentes concentrations et supplémenté en surfactant (Exemple 1b).

### b. Produits testés

Les produits suivants ont été testés dans les exemples :
- Extrait OKEN dilué à différentes concentrations, supplémenté avec 0,5% de surfactant ("Calanque", Action Pin, Castets, France ou INEX A selon les exemples). Le surfactant est systématiquement ajouté à l'extrait « OKEN » dilué qui est utilisé dans les exemples, même s'il n'est pas mentionné.
- Cyanamide hydrogène (Produit DORMEX^{®}), comme témoin positif, à différentes concentrations, supplémenté avec 0,5% de surfactant ("Calanque", Action Pin, Castets, France ou INEX A selon les exemples). Le produit DORMEX^{®} a uniquement été testé en laboratoire, car ce produit n'est plus autorisé en champs en Europe. Le surfactant est systématiquement ajouté au DORMEX^{®} dans les exemples, même s'il n'est pas explicitement mentionné.
- Eau distillée, comme témoin négatif, supplémentée avec 0,5% de surfactant ("Calanque", Action Pin, Castets, France ou INEX A selon les exemples). Le surfactant est systématiquement ajouté à l'eau dans les exemples, même s'il n'est pas explicitement mentionné.

### c. Caractérisation de l'extrait OKEN

1mL de l'extrait OKEN préparé à l'Exemple 1a a été prélevé et centrifugé à 12500 RPM pendant 10min et le surnageant a été filtré sur PVDF à 0.2µm. Le filtrat a ensuite été dilué puis injecté dans un chromatographe HPAE-PAD (ICS5000+ Thermo Scientific) : colonne Thermo Scientific CarboPac PA1, phase mobile Gradient NaOH 200mM, détection ampérométrie pulsée sur électrode d'or.

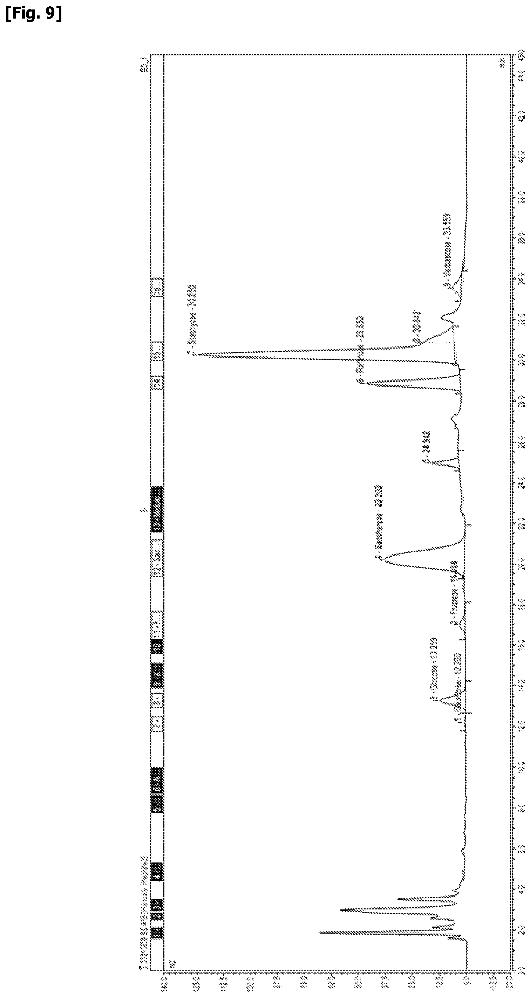

Les résultats sont présentés à la Figure 9. Le chromatogramme montre que l'extrait comprend 1,6% de raffinose, 5,3% de stacchyose et 0,25% de verbascose.

### Exemple 2 : Mesure de la stimulation de la levée de dormance sur le cerisier et l'actinidier

### Essai 1 - Traitement au verger sur cerisiers, variétés 'Fertard' et 'Earlise'

L'extrait OKEN préparé à l'Exemple 1a, dilué dans de l'eau à une concentration de 0,550% et 1,1% v/v, a été pulvérisé sur des cerisiers selon les modalités suivantes :
- 1 application à une concentration de 1,1% pour la variété 'Fertard' le 12 janvier, i.e. lorsque la plante a reçu ¾ de ses besoins en froid.
- 2 applications à une concentration de 0,550% à une semaine d'intervalle pour la variété 'Earlise', avec une première application le 12 janvier, i.e. lorsque la plante a reçu ¾ de ses besoins en froid.
- 2 applications à une concentration de 0,550% à une semaine d'intervalle pour la variété 'Earlise', avec une première application le 24 janvier, i.e. postérieurement à la date à laquelle la plante a reçu ¾ de ses besoins en froid.

De l'eau a également été pulvérisée sur des cerisiers (contrôle).

Dans cet essai, le tensioactif utilisé était Calanque.

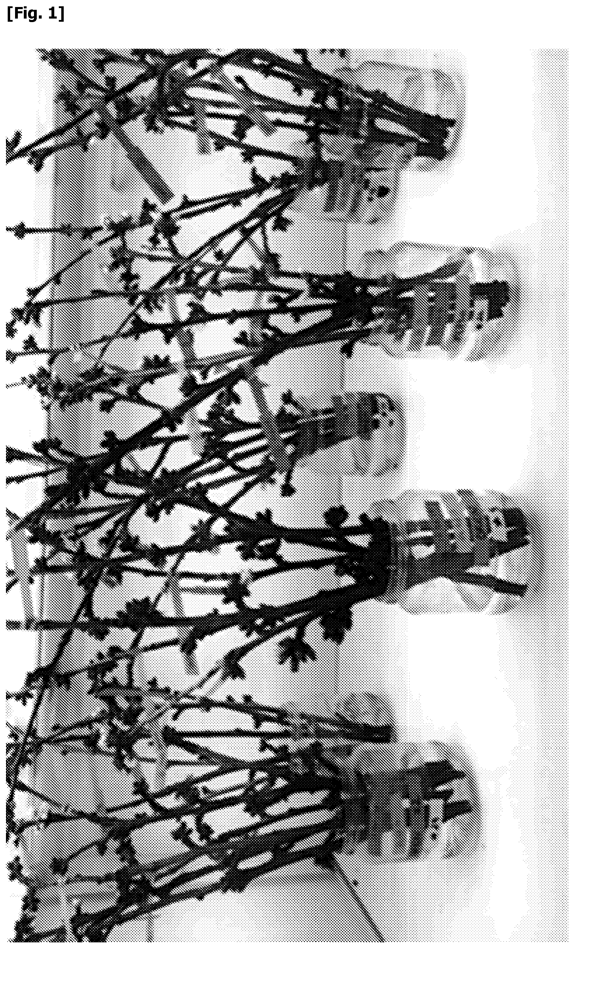

Pour chaque variété, des branches de cerisiers traités (OKEN) ou non traités (contrôle) ont été collectées toutes les semaines et placées dans des pots en verre remplis d'eau en chambre de croissance (25°C, 16h de lumière/jour, 60-70% d'humidité) (Figure 1). La chambre de croissance permet d'induire l'ouverture des bourgeons (débourrement).

Le pourcentage de débourrement (nombre de bourgeons en débourrement par rapport au nombre total de bourgeons) des branches collectées a été mesuré au cours du temps suite au transfert des branches en chambre de croissance. Le pourcentage de débourrement reflète la levée de dormance : plus le pourcentage de débourrement est élevé après transfert en chambre de croissance, plus la levée de dormance est avancée.

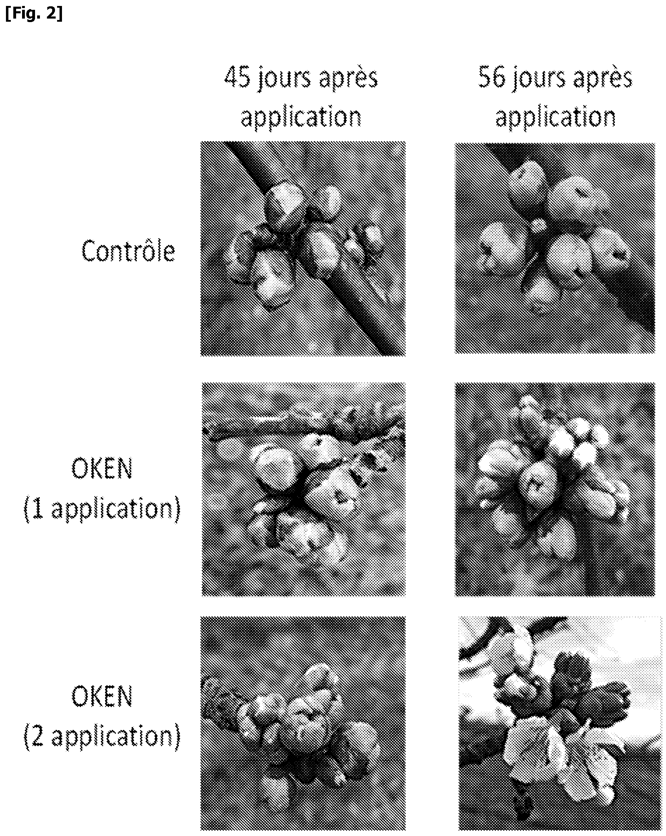

Les résultats pour la variété 'Fertard', montrent que les rameaux traités avec l'extrait OKEN présentent un débourrement plus précoce (Figure 2), comparés aux rameaux non traités.

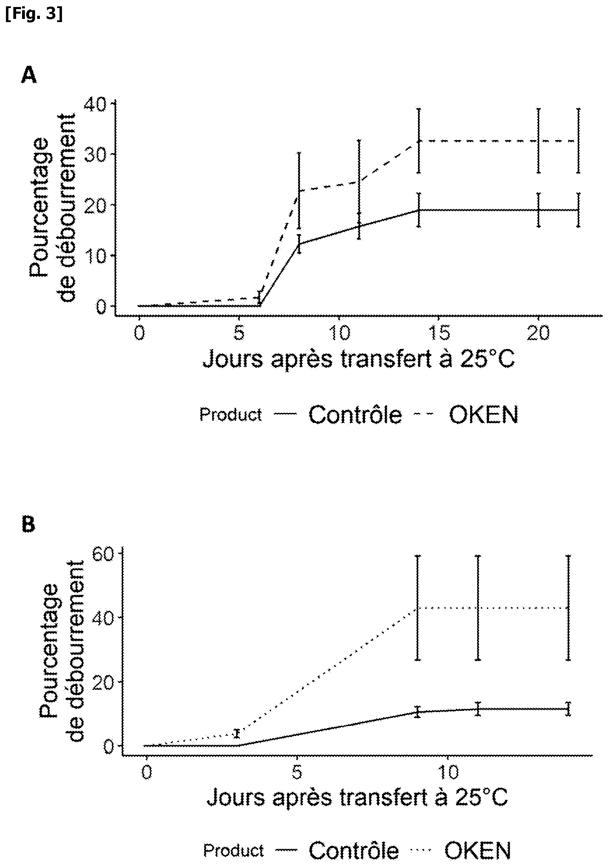

Les résultats pour la variété 'Earlise' montrent que les rameaux traités avec l'extrait OKEN présentent une levée de dormance plus avancée (Figure 3A pour les rameaux ayant reçu une première application le 12 janvier et Figure 3B pour les rameaux ayant reçu une première application le 24 janvier), comparés aux rameaux non traités. L'extrait de soja a donc stimulé la levée de dormance.

### Essai 2 - Traitement en laboratoire sur rameaux coupés de cerisier, variété 'Fertard'

Des rameaux ont été prélevés en janvier, lorsque la plante a reçu ¾ de ses besoins en froid, sur des cerisiers de la variété Fertard. Les rameaux ont ensuite été traités au laboratoire par vaporisation de l'extrait OKEN préparé à l'Exemple 1.a, dilué dans de l'eau à une concentration de 0,275% ou 0,550% (v/v), DORMEX^{®} concentré à 2%, ou eau. Dans cet essai, le tensioactif utilisé était Calanque.

Les rameaux ont été traités avec une seule application de l'extrait de soja à 0,275% ou traités avec deux applications de l'extrait de soja à 0,550% à 1 semaine d'intervalle.

Les rameaux ont été placés en chambre de croissance (25°C, 16h de lumière par jour, 60-70% d'humidité) dans des pots en verre remplis d'eau (Figure 1) pour évaluer le stade de dormance en mesurant le pourcentage de débourrement.

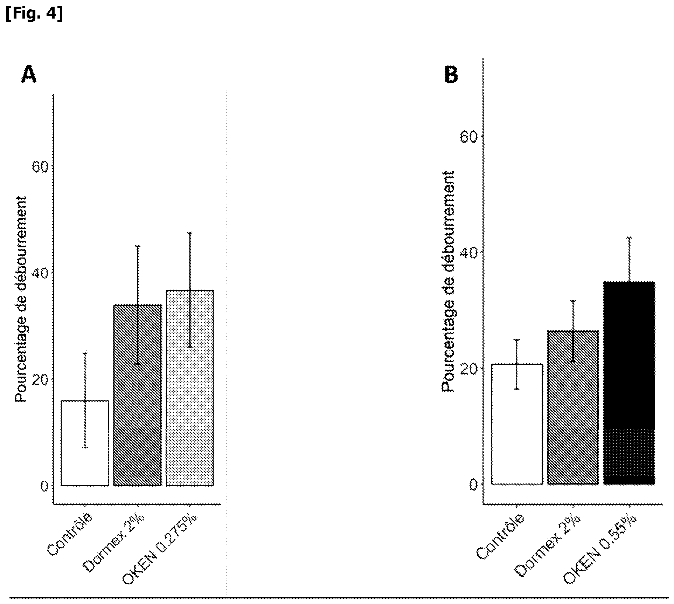

Les résultats sont présentés à la Figure 4.

Les résultats montrent que le débourrement des rameaux traités avec l'extrait de soja est plus important que le débourrement des rameaux traités à l'eau ou au DORMEX^{®} 2%, à la fois avec 1 seule application d'extrait de soja (Figure 4A - le débourrement a été observé 10 jours après l'application) et avec 2 applications d'extrait de soja (Figure 4B - le débourrement a été observé à 22 jours après la première application). Ceci indique une levée de dormance plus avancée pour les bourgeons traités avec l'extrait de soja. L'extrait de soja a donc stimulé la levée de dormance.

### Essai 3 - Traitement au verger sur cerisier, variété 'Ferrovia'

L'extrait OKEN préparé à l'Exemple 1a, dilué dans de l'eau à une concentration de 3% v/v, a été pulvérisé sur des cerisiers, variété *'Ferrovia; à* deux dates en février, en comparaison avec une seule application de DORMEX^{®} dilué dans de l'eau à une concentration de 3% v/v selon les recommandations du fabricant, et de l'eau pour contrôle. Dans cet essai, le tensioactif utilisé était INEX A.

Des rameaux ont ensuite été collectées après chaque traitement et placées en chambre de croissance (25°C, 16h de lumière par jour, 60-70% d'humidité) dans des pots en verre remplis d'eau (Figure 1) afin d'étudier l'ouverture des bourgeons.

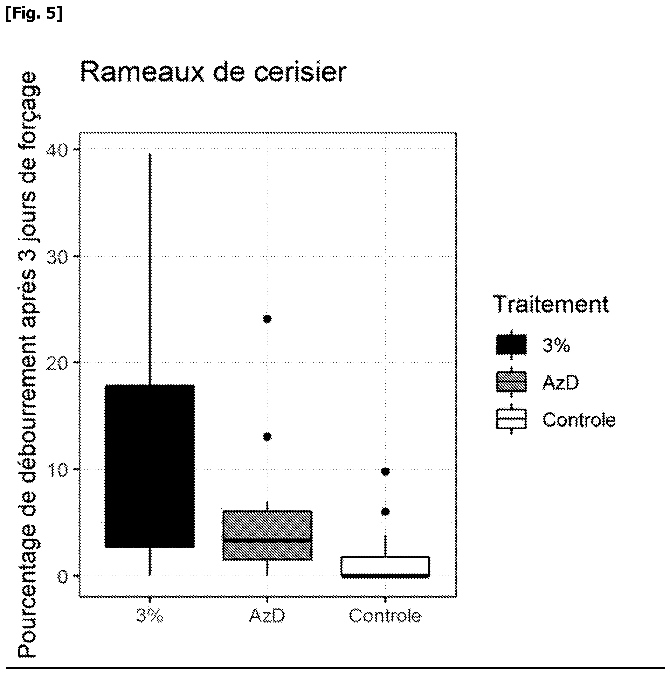

L'ouverture des bourgeons des rameaux traités avec l'extrait de soja a été comparée aux rameaux contrôle et aux rameaux traités avec DORMEX^{®}. Les résultats présentés en Figure 5 montrent qu'après 3 jours en conditions de croissance, les rameaux traités avec l'extrait de soja présentent un débourrement plus avancé que les rameaux traités avec les autres traitements. Ceci indique une levée de dormance plus avancée pour les bourgeons traités avec l'extrait de soja. L'extrait de soja a donc stimulé la levée de dormance.

### Essai 4 - Traitement au verger sur actinidier, variété ' Yellow Latina'

L'extrait OKEN préparé à l'Exemple 1a, dilué dans de l'eau à une concentration de 0,75% ou 3% v/v, a été pulvérisé sur des actinidiers, variété *'Yellow Latina',* en comparaison avec une seule application du produit DORMEX^{®} dilué dans de l'eau à une concentration de 3% v/v selon les recommandations du fabricant, et de l'eau (contrôle). Dans cet essai, le tensioactif utilisé était Inex A.

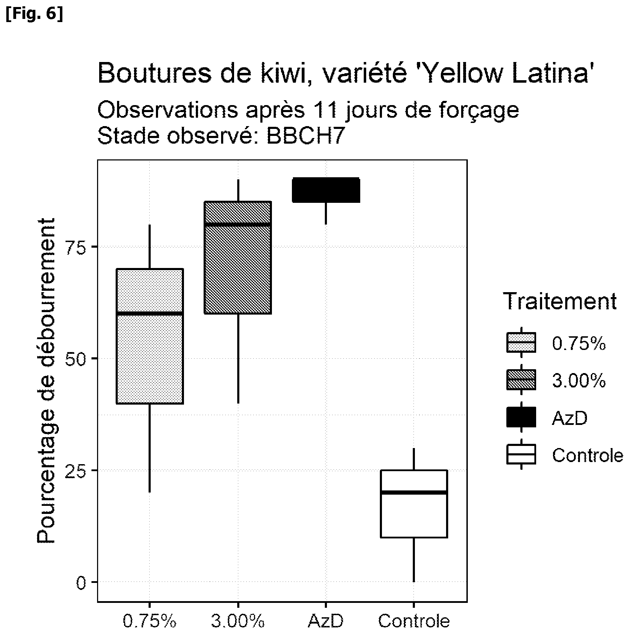

Les rameaux traités ont ensuite été prélevés et transférés en chambre de croissance (25°C, 16h de lumière, 60-70% d'humidité) dans des pots en verre remplis d'eau (Figure 1) afin d'étudier l'ouverture des bourgeons. Après 11 jours, les résultats présentés en Figure 6 montrent que le pourcentage de débourrement est plus important pour les bourgeons traités avec l'extrait de soja ou DORMEX^{®} que pour le contrôle. Ceci indique une levée de dormance plus avancée pour les bourgeons traités avec l'extrait de soja et DORMEX^{®}. L'extrait de soja a donc stimulé la levée de dormance.

### Exemple 3 : Mesure de marqueurs spécifiques de la levée de dormance

### Matériel et méthode

### Prélèvement des bourgeons

Des bourgeons de la variété de cerisier 'Fertard' ont été prélevés directement sur des arbres pulvérisés avec l'extrait OKEN préparé à l'Exemple 1a, dilué dans de l'eau à une concentration de 0,55% v/v ou avec de l'eau (contrôle) (Tableau 1).

**[Table 1]**

| **Année** | **Essai** | **Espèce** | **Variété** | **Nombre d'application** | **Traitement** | **Concentration** | **Date de traitement 1** | **Date de traitement 2** |
|---|---|---|---|---|---|---|---|---|
| 2017 | Vaporisation sur arbre | Cerisier | 'Fertard' | 2 | OKEN | 0,55% | 17/01/2017 | 24/01/2017 |
| 2017 | Vaporisation sur arbre | Cerisier | 'Fertard' | 1 | Contrôle (eau) | | 17/01/2017 | |

Après prélèvement, les bourgeons ont immédiatement été congelés dans de l'azote liquide et ont ensuite été broyés en poudre pour effectuer les analyses.

### Dosage GSH et GSSG

### Extraction des métabolites du soufre

70 mg de poudre de bourgeons congelés ont été pesés dans un tube de 2 ml et maintenus dans de l'azote liquide avant de passer à l'étape suivante. 500 µL d'eau milliQ froide/méthanol 70:30 v/v (stocké à -20°C) contenant 0,4% de solvant acide perchlorique (v/v) ont été ajoutés aux tubes et rapidement mélangés avec un vortex pendant 10 minutes. Ensuite, les échantillons ont été centrifugés (Centrifugeuse 5427 R, Eppendorf) à 12 700 tr/min pendant 15 minutes à 4°C. 400 µL de chaque surnageant ont été soigneusement transférés dans de nouveaux tubes de 2 ml sans perturber le culot. Une seconde extraction a été réalisée sur la poudre restante en ajoutant 500 µL d'acide perchlorique 0,1% (v/v dans l'eau milliQ). Les échantillons ont été mélangés avec un vortex pendant 5 minutes puis centrifugés à 12 700 tr/min pendant 15 minutes à 4°C. A nouveau, 400 µL de chaque surnageant ont été soigneusement transférés sans perturber le culot dans les tubes contenant les surnageants précédents. Les tubes ont été inversés plusieurs fois (ou vortex) pour homogénéiser le liquide. Une centrifugation à 12 700 rpm pendant 10 minutes à 4°C a été réalisée afin culoter les particules en suspension qui peuvent interférer avec les étapes ultérieures. Le surnageant de chaque tube a été récupéré dans de nouveaux tubes de 2 ml sans perturber le culot. Enfin, les surnageants ont été dilués 2 fois avec de l'acide formique à 0,1% (v/v dans de l'eau milliQ) et transférés dans des flacons LC-MS de 2 ml.

### Quantification des métabolites du soufre par UPLC-QToF

L'analyse par chromatographie liquide ultra-haute performance a été réalisée en utilisant un système UPLC Waters Acquity H-Class (Waters Corp, Milford, USA). La séparation des métabolites contenant du soufre, GSH, GSSG, SAM, OAS, Met, a été réalisée à l'aide d'une colonne Waters UPLC HSS T3 (2,1 x 100 mm, 1,8 m). La phase mobile constituée d'eau contenant 0,1 % d'acide formique (A) et d'acétonitrile/méthanol 50:50 v/v contenant 0,1 % d'acide formique (B) a été appliquée avec le gradient d'élution optimisé comme suit : 100 % A à 0-1,5 min, 100-80 % A à 1,5-2 min, 80-20 % A à 2-2,5 min, 20 % A à 2,5-4,5 min, 20-100 % A à 4,5-5 min, 100 % A à 5-7 min. Le débit a été maintenu à 0,4 mL/min et la température de la colonne a été maintenue à 25°C.

La détection par spectrométrie de masse à haute résolution des métabolites a été effectuée par le spectromètre de masse quadripole à temps de vol Waters Xevo G2-S (QToF MS) (Waters Corp, Milford, USA) équipé d'une source d'ionisation par électrospray (ESI). La tension positive de la source ESI a été fixée à 0,5 kV et la tension au cône était de 15 V, tandis que la température de la source était maintenue à 130°C avec un débit de gaz au cône de 20 L/h. La température de désolvatation était de 500°C avec un débit de gaz de désolvatation de 800 L/h. La Leucine-Enkephalin (Waters, Manchester, Royaume-Uni) a été utilisée comme référence de masse (ion à m/z 556,2771 en mode positif), qui a été introduite par un Lockspray à 10 µL/min pour l'étalonnage des données en temps réel. Les données MSE ont été acquises en mode centroïde à l'aide d'une plage de balayage de 50 à 800 Da, d'un temps de balayage de 0,1 s, d'une résolution de 20 000 (FWHM) et d'une rampe d'énergie de collision de 40 à 80 V. Les ions moléculaires [M+ H]+ ont été détectés en ionisation positive. Les pics chromatographiques ont été extraits des chromatogrammes de balayage complet à l'aide du logiciel MassLynx V4.1 (Waters Inc., États-Unis), sur la base des ions [M+H]+. Les zones de pic ont été intégrées à l'aide du logiciel TargetLynx (Waters Inc., USA).

### Expression des gènes PavDAM4 et PavFTpar qRT-PCR

L'ARN total a été extrait à partir de 50-60 mg de poudre de bourgeon congelés en utilisant le mini kit RNAeasy Plant (Qiagen), suivant les recommandations du fabricant avec quelques modifications mineures (1.5% PVP ajouté au tampon RLT). L'ADN génomique a été éliminé par traitement DNAse I (TURBO DNA-free kit, AM1907, Invitrogen) puis l'ARN purifié a été transcrit en utilisant le kit Transcriptor First-Strand cDNA Synthesis (04379012001, Roche), selon le protocole du fabricant.

Les PCR quantitatives (qRT-PCR) ont été réalisées avec le mélange LightCycler 480 DNA SYBR Green I Master mix (04707516001, Roche), avec 0.3 µM d'amorces et 2 µL d'ADNc dilué 10 fois après synthèse. La fluorescence a été quantifiée par 45 cycles PCR (15s dénaturation à 94°C, 30s d'hybridation gà 60°C et 30s de synthèse à 72°C) sur le LightCycler 480 (Roche). L'expression relative a été analysée selon la méthode des deltas à partir du gène de référence *UBQ.* Les amorces utilisées sont : PavFT (GGACCCGCTTGTTGTT, GTAAACGGGTCTAAAACATCAC) (SEQ ID NO : 1, SEQ ID NO : 2), PavDAM4 (TCAAAGAGGAGAAGAGGGA, TGCCACCTCAGATTCACA) (SEQ ID NO : 3, SEQ ID NO : 4) et PavUBQ (TTGTTCCATACACAGTAGCAT, GTCTGATACCGTCATTGCTTA) (SEQ ID NO : 5, SEQ ID NO : 6).

### Résultats

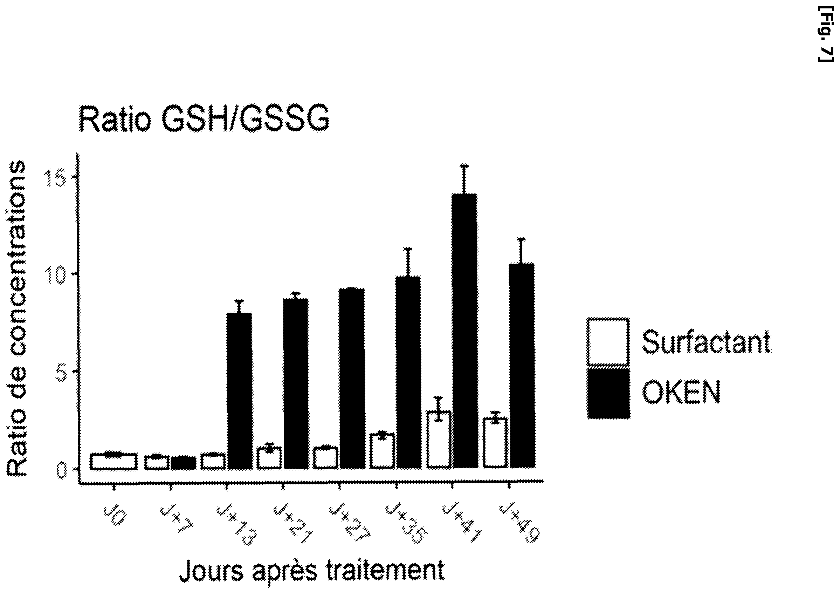

Les résultats sur le ratio « GSH/GSSG » sont présentés à la Figure 7.

L'augmentation du ratio GSH/GSSG est un marqueur de la levée de dormance et les résultats montrent un ratio beaucoup plus important dans les bourgeons traités avec l'extrait de soja dès 13 jours après traitement comparé au contrôle non traité, ce qui montre que la levée de dormance est stimulée par le traitement avec l'extrait de soja.

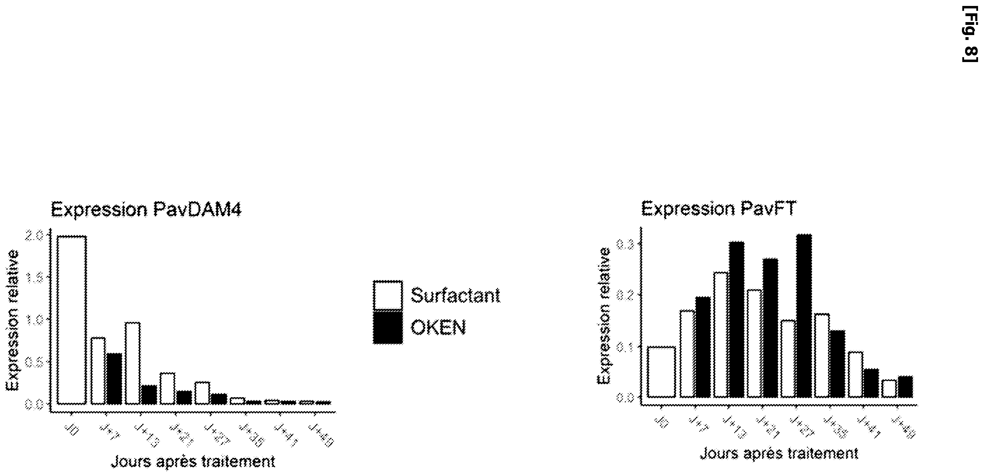

Les résultats sur l'expression des gènes PavDAM4 et PavFT sont présentés à la Figure 8.

Les résultats montrent que le gène *PavDAM4* est moins exprimé dans les bourgeons traités avec l'extrait de soja comparé au contrôle, ce qui suggère que la levée de dormance est stimulée avec l'extrait de soja. Ces résultats sont confirmés par l'expression de *PavF7,* marqueur de la levée de dormance précoce, qui est plus élevée dans les bourgeons traités avec l'extrait de soja comparé aux bourgeons non traités.

### Références citées

[1] Akiko et al., Physiological differences between bud breaking and flowering after dormancy completion revealed by DAM and FT/TFL1 expression in Japanese pear (Pyrus pyrifolia), Tree Physiology, 2015.
[2] Vimont et al., From bud formation to flowering: transcriptomic state defines the cherry developmental phases of sweet cherry bud dormancy, BMC Genomics, 2019.
[3] Rinne et al., Chilling of Dormant Buds Hyperinduces FLOWERING LOCUS T and Recruits GA-Inducible 1,3-β-Glucanases to Reopen Signal Conduits and Release Dormancy in Populus, The Plant Cell, 2011.
[4] Jimenez et al., Gene expression of DAM5 and DAM6 is suppressed by chilling temperatures and inversely correlated with bud break rate, Plant Molecular Biology, 2010.
[5] Beauvieux et al., Bud Dormancy in Perennial Fruit Tree Species: A Pivotal Role for Oxidative Cues, Front. Plant Sci., 2018.

## Revendications

1. Utilisation d'un extrait aqueux de soja pour stimuler la levée de dormance d'une plante pérenne fruitière, dans laquelle l'extrait comprend du raffinose, du stachyose et du verbascose.

2. Procédé pour stimuler la levée de dormance d'une plante pérenne fruitière, dans lequel un extrait aqueux de soja est apporté à ladite plante dans une quantité suffisante pour stimuler la levée de dormance de ladite plante, dans lequel l'extrait comprend du raffinose, du stachyose et du verbascose.

3. Utilisation ou procédé selon l'une quelconque des revendications 1 ou 2, dans lequel l'extrait aqueux de soja est un extrait aqueux de fibres ou un extrait aqueux de pulpe de soja.

4. Utilisation ou procédé selon l'une quelconque des revendications 1 à 3, dans lequel la plante est une plante pérenne, par exemple une plante pérennes fruitières.

5. Utilisation ou procédé selon l'une quelconque des revendications 1 à 4, dans lequel la plante pérenne fruitière est un arbre fruitier, par exemple un arbre fruitier à feuilles caduques, ou une liane à fruit.

6. Utilisation ou procédé selon la revendication 5, dans lequel :
- l'arbre fruitier à feuilles caduques est un cerisier, un prunier, un pêcher, un abricotier, un pommier, un poirier, un citronnier, ou un oranger ;
- la liane à fruit est une vigne ou un actinidier.

7. Utilisation ou procédé selon l'une quelconque des revendications 1 à 6, dans lequel l'extrait est apporté à la plante sous forme liquide.

8. Utilisation ou procédé selon l'une quelconque des revendications 1 à 7, dans lequel l'extrait est apporté à la plante par voie aérienne, de préférence l'extrait est appliqué sur les bourgeons de la plante.

9. Utilisation ou procédé selon l'une quelconque des revendications 1 à 8, dans lequel l'extrait est apporté à la plante quand ladite plante pérenne fruitière a eu ¾ de ses besoins en froid.

10. Utilisation ou procédé selon l'une quelconque des revendications 1 à 9, dans lequel l'extrait est mélangé à un tensioactif.

11. Utilisation ou procédé selon l'une quelconque des revendications 1 à 10, dans lequel l'extrait stimule l'expression du gène *FLOWERING LOCUS T (FT)* et/ou réprime l'expression du gène *DORMANCY ASSOCIATED MADS-box 4 (DAM4).*

12. Utilisation ou procédé selon l'une quelconque des revendications 1 à 11, dans lequel ledit extrait augmente le ratio GSH (forme réduite du Glutathion) / GSSG (Forme oxydée du Glutathion) au niveau des bourgeons de la plante ayant reçu l'extrait par rapport à une plante n'ayant pas reçu l'extrait.

13. Utilisation ou procédé selon l'une quelconque des revendications 1 à 12, dans lequel ladite plante pérenne fruitière n'est pas traitée au cyanamide hydrogène.

## Patentansprüche

1. Verwendung eines wässrigen Sojaextrakts zur Stimulierung des Knospenruhebruchs in einer mehrjährigen Obstpflanze, wobei der Extrakt Raffinose, Stachyose und Verbascose umfasst.

2. Verfahren zur Förderung des Knospenruhebruchs in einer mehrjährigen Obstpflanze, wobei ein wässriger Sojaextrakt der Pflanze in einer Menge zugeführt wird, die ausreicht, um den Knospenruhebruch der genannten Pflanze zu stimulieren, wobei der Extrakt Raffinose, Stachyose und Verbascose umfasst.

3. Verwendung oder Verfahren nach einem der Ansprüche 1 oder 2, wobei der wässrige Sojaextrakt ein wässriger Faserextrakt oder ein wässriger Pulpeextrakt von Soja ist.

4. Verwendung oder Verfahren nach einem der Ansprüche 1 bis 3, wobei die Pflanze eine mehrjährige Pflanze ist, beispielsweise eine mehrjährige Obstpflanze.

5. Verwendung oder Verfahren nach einem der Ansprüche 1 bis 4, wobei die mehrjährige Obstpflanze ein Obstbaum, beispielsweise ein laubabwerfender Obstbaum, oder eine fruchttragende Liane ist.

6. Verwendung oder Verfahren nach Anspruch 5, wobei:
- der laubabwerfende Obstbaum ein Kirschbaum, ein Pflaumenbaum, ein Pfirsichbaum, ein Aprikosenbaum, ein Apfelbaum, ein Birnbaum, ein Zitronenbaum oder ein Orangenbaum ist;
- die fruchttragende Liane eine Weinrebe oder ein Strahlengriffel ist.

7. Verwendung oder Verfahren nach einem der Ansprüche 1 bis 6, wobei der Extrakt der Pflanze in flüssiger Form zugeführt wird.

8. Verwendung oder Verfahren nach einem der Ansprüche 1 bis 7, wobei der Extrakt der Pflanze über den Luftweg zugeführt wird, wobei der Extrakt vorzugsweise auf die Knospen der Pflanze aufgetragen wird.

9. Verwendung oder Verfahren nach einem der Ansprüche 1 bis 8, wobei der Extrakt der Pflanze zugeführt wird, wenn die mehrjährige Obstpflanze 3/4 ihres Kältebedarfs erreicht hat.

10. Verwendung oder Verfahren nach einem der Ansprüche 1 bis 9, wobei der Extrakt mit einem Tensid gemischt wird.

11. Verwendung oder Verfahren nach einem der Ansprüche 1 bis, wobei der Extrakt die Expression des Gens *FLOWERING LOCUS T* (*FT*) stimuliert und/oder die Expression des Gens *DORMANCY ASSOCIATED MADS-box 4* (*DAM4*) reprimiert.

12. Verwendung oder Verfahren nach einem der Ansprüche 1 bis 11, wobei der Extrakt das Verhältnis GSH (reduzierte Form von Glutathion) / GSSG (oxidierte Form von Glutathion) auf Ebene der Knospen der Pflanze, die den Extrakt erhalten hat, im Vergleich zu einer Pflanze, die den Extrakt nicht erhalten hat, erhöht.

13. Verwendung oder Verfahren nach einem der Ansprüche 1 bis 12, wobei die mehrjährige Obstpflanze nicht mit Wasserstoffcyanamid behandelt wird.

## Claims

1. A use of an extract of an aqueous soy extract in order to stimulate the breaking of dormancy in a perennial fruit plant, wherein the extract comprises one or more sugars chosen from raffinose, stachyose and verbascose.

2. A method for stimulating the breaking of dormancy in a perennial fruit plant, in which an aqueous soy extract is supplied to said plant in a sufficient quantity to stimulate the breaking of dormancy in said plant, wherein the extract comprises one or more sugars chosen from raffinose, stachyose and verbascose.

3. The use or method according to any one of claims 1 or 2, wherein the aqueous soy extract is an aqueous soy fibers extract or an aqueous soy pulp extract.

4. The use or method according to any one of claims 1 to 3, wherein the plant is a perennial plant, for example a perennial fruit plant.

5. The use or method according to any one of claims 1 to 4, wherein the perennial fruit plant is a fruit tree, for example a deciduous fruit tree, or a fruit creeper.

6. The use or method according to claim 5, wherein:
- the deciduous fruit tree is a cherry tree, a plum tree, a peach tree, an apricot tree, an apple tree, a pear tree, a lemon tree, or an orange tree;
- the fruit creeper is a vine or an actinide tree.

7. The use or method according to any one of claims 1 to 6, wherein the extract is supplied to the plant in liquid form.

8. The use or method according to any one of claims 1 to 7, wherein the extract is delivered to the plant by air, preferably the extract is applied to the buds of the plant.

9. The use or method according to any one of claims 1 to 8, wherein the extract is supplied to the plant when said perennial fruit plant has received ¾ of its cold requirements.

10. The use or method according to any one of claims 1 to 9, wherein the extract is mixed with a surfactant.

11. The use or method according to any one of claims 1 to 10, wherein the extract stimulates the expression of the *FLOWERING LOCUS T* (*FT)* gene and/or represses the expression of the *DORMANCY ASSOCIATED MADS-box 4* (*DAM4)* gene.

12. The use or method according to any one of claims 1 to 11, wherein said extract increases the GSH (reduced form of Glutathione)/GSSG (oxidized form of Glutathione) ratio at the buds of the plant having received the extract compared to a plant that has not received the extract.

13. The use or method according to any one of claims 1 to 12, wherein said perennial fruit plant is not treated with hydrogen cyanamide.
